# EUROPÄISCHE PATENTSCHRIFT

(11) **EP 1 895 139 B1**
(45) Veröffentlichungstag und Bekanntmachung des Hinweises auf die Patenterteilung: **16.03.2011**
(21) Anmeldenummer: 07012549.7
(22) Anmeldetag: 27.06.2007
(51) Int. Cl.: F02G 5/02, B60H 1/32, F25B 27/02, F02B 63/04

(54) **Energieversorgungssystem**
Energy supply system
Système d'alimentation en énergie

(30) Priorität: 22.08.2006 DE 102006039341
(43) Veröffentlichungstag der Anmeldung: 05.03.2008
(73) Patentinhaber: Schmidt, Werner, 49584 Fürstenau (DE)
(72) Erfinder: Schmidt, Werner, 49584 Fürstenau (DE)
(74) Vertreter: Bossmeyer, Jörg Peter

(56) Entgegenhaltungen:
- WO-A-00/71944
- DE-A1- 10 127 893
- DE-A1-102005 018 313

## Beschreibung

Die Erfindung betrifft ein Energieversorgungssystem, nach dem Oberbegriff des Anspruchs 1. Ferner betrifft die Erfindung die Verwendung eines solchen Energieversorgungssystem.s.

Derartige Systeme sind aus dem Stand der Technik bekannt. Die DE 31 16 624 A1 betrifft z.B, ein Energievcrsorgungssystem mit mehreren Einheiten, die wenigstens eine Wärmepumpen-Einheit, eine Strom-/Wärmeeinheit, und/oder eine Kessel-Einheit aufweisen. Bei der Wärmepumpen-Einheit wird von einer Brennkraftmaschine ein Verdichter angetrieben, der unter Zwischenschaltung eines Verdampfers über Leitungen mit einer Wärmequelle gekoppelt ist. Ferner ist der Verdichter unter Zwischenschaltung eines Kondensators über Leitungen mit Wärmeverbrauchern gekoppelt. In diesen Kreislauf der Wärmeverbraucher sind zusätzlich ein Kühlwasser-Wärmetauscher und ein Abgaswärmetauscher angeordnet, die mit der Kühlung der Brennkraftmaschine bzw. mit der Abgasleitung der Brennkraftmaschine gekoppelt sind. Bei der Strom-/Wärmeeinheit treibt eine andere Brennkraftmaschine einen Generator an. Die andere Brennkraftmaschine ist unter Zwischenschaltung eines Kühlwasser-Wärmetauschers und eines Abgaswärmetauschers mit Leitungen gekoppelt. Gemäß einer Variante der Strom-/Wärmeeinheit wirkt eine Dampfturbine auf die Kurbelwelle der Brennkraftmaschine und somit auch auf den Generator.

Nachteilig an dieser Anordnung sind der relativ große Bauraum und die vergleichsweise hohen Kosten, was den Einsatz eines solchen Systems für kleinere Objekte, wie z.B. einem Einfamilienhaus, unattraktiv macht. Ferner besteht der Bedarf, den Wirkungsgrad des Systems zu erhöhen.

Die DE 101 27 893 A1 offenbart eine modulare Vorrichtung zur Energieerzeugung mit einem Bremkraftmotor, einer mit der Brennkraftmotor über eine erste Reibungskupplung gekoppelten elektrischen Maschine, die mit dem elektrischen Verteilernetz verbunden werden kann, und einer mit der Flüssigkeitskühlanlage der Brennkraftmaschine verbundenen Einrichtung, die aus einem Flüssigkeitswärmespeicher bestehen kann oder alternativ hierzu eine Absorptions-Wärmepumpe sein kann, die aus der Wärme Kälte zu erzeugen vermag. Die elektrische Maschine ist über eine zweite Küpplungseinrichtung mit einem Dreh-Fuidverdichter verbunden, der mit einer doppelt wirkenden Wärmepumpe verbunden werden kann, die Wahlweise für die Wärme- und Kälteerzeugung umschaltbar ist. Der Verdichter kann überdies mit Kältekreisen unterschiedlicher Art verbunden werden.

Die WO 00/7194 A1 beschreibt ein System mit einem kontinuierlichen Fluid-Pfad, in dem ein Arbeits-Fluid zirkuliert. In den Pfad ist eine Turbine (oder ein Hydraulikmotor) geschaltet, die mechanisch mit einem Kompressor eines Dampfdruck-Kälte-Systems gekoppelt ist. Der Fluid-Pfad ist thermisch mit einem Kondensator des Dampfdruck-Kälte-Systems gekoppelt, wobei das Arbeits-Fluid Wärme von dem Kondensator aufnimmt. Dadurch wird eine Expansion des Fluids bewirkt, welches die Turbine antreibt, die wiederum den Kompressor und somit das Dampfdruck-Kälte-System antreibt. Danach kondensiert das Fluid und wird zur Aufnahme von Wärme erneut dem Kondensator zugeführt. In den Fluid-Pfad kann ein Wärmetauscher geschaltet sein, welcher dem Arbeits-Fluid Wärme von einer externen Wärmequelle zuführt. Ferner kann ein Verdampfer des Dampfdruck-Kälte-Systems thermisch mit dem Fluid-Pfad gekoppelt sein, sodass das Arbeits-Fluid gekühlt wird. Alternativ kann ein Kondensator in den Fluid-Pfad geschaltet sein, sodass eine Abkühlung des Arbeits-Fluids durch die Umgebung erfolgt.

Die DE 10 2005 018 313 A1 offenbart eine Fluidmaschine mit einem Kompressor zum Komprimieren von Arbeitsfluid, einer Expansionseinrichtung zum Erzeugen einer Drehbewegung, einer elektrischen Maschine, wobei die Expansionseinrichtung mechanisch mit der elektrischen Maschine und mit dem Kompressor verbundenen ist, und einer schaltbaren Kupplung, die zwischen den Kompressor und die Expansionseinrichtung geschaltet ist. Das Arbeitsfluid strömt vom Kompressor durch eine Wärmeabstrahleinrichtung, durch einen Gas/Flüssigkeitsabscheider, durch ein Expansi.onsventil, durch einen Verdampfer und von dort zurück zum Kompressor. Ein erster Bypass-Durchtritt ist zwischen dem Gas/Flüssigkeits-Abscheider und der Expansionseinrichtung vorgesehen, und ein zweiter Bypass-Durchtritt ist zwischen der Expansionseinrichtung und der Wärmeabstrahleinrichtung vorgesehen. Ein Motor weist einen Radiatorkreislauf für Motorkühlwasser auf, in den eine Heizeinrichtung zum Aufheizen des Kühlwassers durch Abgase des Motors geschaltet ist. Das so erhitzte Kühlwasser gibt seine Wärme durch eine Kältemittelheizeinrichtung an das Arbeitsfluid in dem ersten Bypass-Durchtritt ab. Die Fluidmaschine kann durch den Motor angetrieben werden.

Ausgehend von der DE 101 27 893 A1 liegt der Erfindung die Aufgabe zugrunde, die dem primären Heizkreislauf und somit dem systemexternen elektrischen Verbraucher zuführbare Wärme bei möglichst geringer Erhöhung des Kraftstoffverbauchs der Brennkraftmaschine erhöhen zu können.

Diese Aufgabe wird erfindungsgemäß mit einem Energieversorgungssystem nach Anspruch 1 und mit der Verwendung eines Energieversorgungssystem nach 14 gelöst. Bevorzugte Weiterbildungen sind in den Unteransprüchen gegeben.

Das erfindungsgemäße Energieversorgungssystem für Elektrizität und Wärme weist eine Brennkraftmaschine, einen von der Brennkraftmaschine angetriebenen oder antreibbaren elektrischen Generator, der mit wenigstens einem systemexternen elektrischen Verbraucher elektrisch gekoppelt oder koppelbar ist, und einen mit der Brennkraftmaschine thermisch gekoppelten primären Heizkreislauf auf, der ein Wärmeträgermedium umfasst, das insbesondere in dem primären Heizkreislauf zirkuliert oder zirkulieren kann, der mit wenigstens einem systemexternen Wärmeverbraucher thermisch gekoppelt oder koppelbar ist. Dabei ist von der Brennkraftmaschine unter Zwischenschaltung einer schaltbaren Kupplung ein Verdichter angetrieben oder antreibbar, der in einen Kältekreislauf geschaltet ist, der ein Kältemittel umfasst, das insbesondere in dem Kältekreislauf zirkuliert oder zirkulieren kann, der mit dem primären Hcizkrcislauf und mit einem mit einer systemexternen Wärmequelle thermisch gekoppelten Absorber thermisch gekoppelt ist.

Da erfindungsgemäß der Generator und der Verdichter von derselben Brennkraftmaschine angetrieben werden, wird gegenüber dem Stand der Technik zumindest eine Brennkratimaschine eingespart. Ferner entfallen Installationen, die im Zusammenhang mit einer zusätzlichen Brennkraftmaschine entstünden, so das insgesamt Kosten und Bauraum eingespart werden können. Das erfindungsgemäße System wird somit attraktiv für kleinere Objekte.

Ferner kann durch das erfindungsgemäße Energieversorgungssystem mehr von der in dem Kraftstoff für die Brennkraftmaschine gebundenen Energie in nutzbare Energie umgesetzt werden, so dass der Wirkungsgrad gegenüber herkömmlichen Systemen erhöht werden kann. Dies folgt unter anderem daraus, dass Reibungsverluste entfallen, die im Zusammenhang mit einer zusätzlichen Brennkraftmaschinen entstünden.

Da bei dem erfindungsgemäßen System die Brennkraftmaschine unter Zwischenschaltung einer (ersten) schaltbaren Kupplung mit dem Verdichter (Kompressor) gekoppelt ist, kann dieser bei Bedarf zugeschaltet werden, insbesondere dann, wenn der primäre Heizkreislauf eine geringere Temperatur als eine gewünschte Temperatur aufweist. Die Temperatur des primären Heizkreislaufs kann z.B. mittels eines Temperaturfühlers gemessen werden, der mit einer Regelung oder Steuerung gekoppelt ist, mittels welcher die erste Kupplung in Abhängigkeit von der gemessenen Temperatur in den gekuppelten oder in den entkuppelten Zustand schaltbar ist. Bevorzugt wird die erste Kupplung in den gekuppelten Zustand geschaltet, wenn die Temperatur des primären Heizkreislaufs unterhalb der gewünschten Temperatur liegt. Ferner kann die erste Kupplung in den entkuppelten Zustand geschaltet werden, wenn die Temperatur des primären Heizkreislaufs oberhalb der gewünschten Temperatur liegt oder mit dieser zusammenfällt. Der Temperaturfühler kann aber auch die Temperatur eines anderen Heiz- oder Wärmekreislaufs oder Körpers messen, der mit dem primären Heizkreislauf mittelbar oder unmittelbar thermisch gekoppelt ist.

Die erste Kupplung kann bevorzugt erst dann in den gekuppelten Zustand geschaltet werden, wenn die Brennkraftmaschine stabil läuft, so dass insbesondere während des Anlaufens der Brennkraftmaschine aus dem Stillstand die erste Kupplung in den entkuppelten Zustand geschaltet ist. Die erste Kupplung ist bevorzugt an dem Verdichter angeordnet, insbesondere mit dessen Antriebswelle verbunden. Allerdings kann die erste Kupplung auch direkt an der Brennkraftmaschine vorgesehen sein.

Die Brennkraftmaschine ist bevorzugt unter Zwischenschaltung einer zweiten schaltbaren Kupplung mit dem elektrischen Generator gekoppelt oder koppelbar, so dass dieser je nach Bedarf mit der Brennkraftmaschine gekoppelt oder von dieser entkoppelt ist. Dabei kann die zweite Kupplung während des Anlaufens der Brennkraftmaschine in den gekuppelten Zustand geschaltet sein oder werden. Alternativ ist es möglich, die zweite Kupplung erst dann in den gekuppelten Zustand zu schalten, wenn die Brennkraftmaschine stabil läuft, so dass die zweite Kupplung während des Anlaufens der Brennkraftmaschine in den entkuppelten Zustand geschaltet ist. Die zweite Kupplung ist bevorzugt an dem Generator angeordnet, insbesondere mit dessen Antriebswelle verbunden. Allerdings kann die zweite Kupplung auch direkt an der Brennkraftmaschine vorgesehen sein. Alternativ es möglich, den Generator dauerhaft mit der Brennkraftmaschine zu koppeln. In diesem Fall kann die zweite schaltbare Kupplung entfallen.

Ferner kann die zweite Kupplung mit der Regelung oder Steuerung oder mit einer separaten Regelung oder Steuerung gekoppelt sein und von dieser in den gekuppelten oder den entkuppelten Zustand geschaltet werden. Die erste und/oder die zweite Kupplung sind insbesondere jeweils als Magnetkupplung ausgebildet, die z.B. elektrisch mit der zugehörigen Regelung oder Steuerung gekoppelt ist.

Die Brennkraftmaschine, der Generator und der Verdichter können jeweils eine Riemenscheibe aufweisen, wobei die Riemenscheiben mittels eines Riemens mechanisch miteinander gekoppelt sind. Somit ist das Antreiben des Generators und/oder des Verdichters durch die Brennkraftmaschine besonders einfach mittels eines Riementriebs realisierbar. Dabei kann zwischen der Riemenscheibe des Verdichters und dem Verdichter bzw. dessen Antriebswelle die erste Kupplung geschaltet sein. Ferner kann die zweite Kupplung zwischen der Riemenscheibe des Generators und dem Generator bzw. dessen Antriebswelle geschaltet sein. Der Riemen ist bevorzugt ein Zahnriemen, so dass die Riemenscheiben als Zahnriemenscheiben ausgebildet sein können, in deren Verzahnungen der Zahnriemen mit seiner Verzahnung eingreift. Alternativ kann die Brennkraftmaschine mit dem Generator und/oder dem Verdichter aber auch über ein anderes Triebsmittel als ein Riementrieb gekoppelt sein.

Der Kältekreislauf ist bevorzugt mit einer systemexternen Wärmequelle thermisch gekoppelt, die insbesondere eine natürliche Wärmequelle ist. Als natürliche Wärmequelle können dabei die Erde und/oder die Sonne genutzt werden, so dass dem Kältekreislauf z.B. Erdwärme und/oder durch die Sonne erzeugte Wärme zugeführt wird oder zuführbar ist. Zum Aufnehmen der von der systemexternen Wärmquelle erzeugten Wärme kann wenigstens ein Absorber bzw. Wärmeabsorber vorgesehen sein, der mit dem Kältekreislauf thermisch gekoppelt ist. Der Absorber ist bevorzugt mit der systemexternen Wärmequelle thermisch gekoppelt und kann z.B., falls es sich bei der systemexternen Wärmquelle um die Erde handelt, im Erdreich in einer bestimmten Tiefe zur Aufnahme von Erdwärme angeordnet sein. Der Absorber kann ein Flächenabsorber sein, der insbesondere in einer Tiefe von ca. 1,50 m im Erdreich angeordnet ist. Ferner kann der Absorber ein Spiralabsorber sein, der bevorzugt in einer Tiefe von ca. 6 m bis 7 m im Erdreich sitzt. Auch andere Ausgestaltungen des Absorbers sind möglich, die bis zu Tiefe von ca. 100 m in das Erdreich eingelassen sein können.

Der Kältekreislauf ist bevorzugt mit einem Wärmekreislauf thermisch gekoppelt, der ein Wärmeträgermedium aufweist, das insbesondere in dem Wärmekreislauf zirkuliert oder zirkulieren kann, der mit der systemexternen Wärmequelle und/oder dem Absorber thermisch gekoppelt oder koppelbar ist. Insbesondere ist der Absorber in den Wärmekreislauf geschaltet, so dass der Kältekreislauf bevorzugt unter Zwischenschaltung des Wärmekreislaufs und/oder des Absorbers mit der systemexternen Wärmequelle thermisch gekoppelt ist.

Ferner kann der Wärmekreislauf zur Kühlung, insbesondere zur Kernkühlung oder Gebäudekühlung verwendet werden. Hierzu kann ein zusätzlicher Kreislauf unter Zwischenschaltung eines Wärmetauschers thermisch mit dem Wärmekreislauf gekoppelt sein. Der zusätzliche Kreislauf dient z.B. zur Kühlung einer Heizung, insbesondere einer Fußbodenheizung, eines Objekts oder Gebäudes und weist bevorzugt ein Wärmeträgermedium auf, das insbesondere in dem zusätzlichen Kreislauf zirkuliert oder zirkulieren kann.

Die thermische Kopplung zwischen dem Kältekreislauf und dem primären Heizkreislauf erfolgt z.B. über einen Wärmetauscher, insbesondere über einen Plattenwärmetauscher oder einen Rohrbündelwärmetauscher. Ferner kann der Kältekreislauf mit dem Wärmekreislauf über einen Wärmetauscher, insbesondere über einen Plattenwärmetauscher oder einen Rohrbündelwärmetauscher, thermisch gekoppelt sein. Bevorzugt ist in den Kältekreislauf ein Verflüssiger (Kondensator) geschaltet, mittels welchem der Kältekreislauf thermisch mit dem primären Heizkreislauf gekoppelt ist. Ferner kann in den Kältekreislauf ein Verdampfer geschaltet sein, mittels welchem der Kältekreislauf thermisch mit dem Wärmekreislauf gekoppelt ist. Dabei bilden der Verflüssiger und/oder der Verdampfer insbesondere jeweils den jeweiligen Wärmetauscher (bzw. Plattenwärmetauscher oder Rohrbündelwärmetauscher) oder einen Teil desselben. Der Verflüssiger und der Verdampfer sind über wenigstens zwei Verbindungen oder Verbindungsleitungen des Kältekreislaufs miteinander verbunden, wobei der Verdichter in eine der Verbindungen bzw. Verbindungsleitungen geschaltet ist oder diese bildet. Ferner kann eine Drossel oder ein Expansionsventil in eine andere der Verbindungen bzw. Verbindungsleitungen geschaltet sein oder diese bilden, wobei es sich bei der Drossel auch um eine regulierbare Drossel handeln kann. Die Drossel oder das Expansionsventil können dabei mit dem Verdichter zu einer baulichen Einheit zusammengefasst sein. Der Verdichter ist insbesondere ein Scrollverdichter, kann aber auch von einem anderen geeigneten Verdichtertyp gebildet sein.

Es kann lediglich ein Kältekreislauf mit dem primären Heizkreislauf thermisch gekoppelt sein. Es ist aber auch möglich, mehrere, z.B. 4 bis 6, Kältekreisläufe mit dem primären Heizkreislauf thermisch zu koppeln, die unabhängig voneinander sind und jeweils einen durch die Brennkraftmaschine antreibbaren oder angetrieben Verdichter aufweisen. Auch hier erfolgt die Kopplung zwischen der Brennkraftmaschine und den Verdichtern bevorzugt über jeweils eine schaltbare Kupplung. Dabei können die Kältekreisläufe identisch aufgebaut sein und mit derselben oder mit unterschiedlichen systemexternen Wärmequellen, insbesondere unter Zwischenschaltung jeweils eines Absorbers, thermisch gekoppelt sein. Ferner weist jeder der Kältekreisläufe insbesondere eine Drossel oder ein Expansionsventil auf, wobei es sich bei der Drossel auch um eine regulierbare Drossel handeln kann. Die Verdichter sind bevorzugt zu einer baulichen Einheit zusammengefasst, die auch die Drosseln oder Expansionsventile umfassen kann. Insbesondere ist es möglich, alle Verdichter gemeinsam mittels einer einzigen Antriebswelle anzutreiben, die bevorzugt über die zugehörige Riemenscheibe mit dem Riemen gekoppelt ist.

Die thermische Kopplung zwischen dem primären Heizkreislauf und der Brennkraftmaschine kann z.B. dadurch realisiert sein, dass der primäre Heizkreislauf einen Kühlkreislauf für die Brennkraftmaschine bildet. Ferner kann die Brennkraftmaschine eine Abgasleitung aufweisen, die mittels eines Wärmetauschers (Abgaswärmetauscher) mit dem primären Heizkreislauf thermisch gekoppelt ist.

Regelmäßig wird auch von dem elektrischen Generator im Betrieb Abwärme erzeugt, die z.B. über eine Luftkühlung abgeführt werden kann. Bevorzugt ist aber der Generator mit dem primären Heizkreislauf thermisch gekoppelt, so dass die Abwärme des Generators für das Energieversorgungssystem nutzbar ist. Der primäre Heizkreislauf bildet somit einen Kühlkreislauf für den Generator.

Der primäre Heizkreislauf kann mit dem wenigstens einen systemexternen Wärmeverbraucher unter Zwischenschaltung eines sekundären Heizkreislaufs thermisch gekoppelt sein, der ein Wärmeträgermedium aufweist, das insbesondere in dem sekundären Heizkreislauf zirkuliert oder zirkulieren kann, der mittels eines Wärmetauschers mit dem primären Heizkreislauf thermisch gekoppelt ist. Der sekundäre Heizkreislauf kann dabei in einem Objekt oder Gebäude (z.B. Haus) installiert sein und einen Heizkreislauf für das Objekt oder Gebäude bilden.

Der wenigstens eine systemexterne Wärmeverbraucher ist z.B. eine Heizung und/oder ein Wärmetauscher zum Erwärmen von Brauchwasser und/oder Heizungswasser, wobei die Heizung und/oder der Wärmetauscher zum Erwärmen von Brauchwasser und/oder Heizungswasser insbesondere in dem Objekt oder Gebäude installiert ist.

Der elektrische Generator kann mit einem elektrischen Gebäudenetz (z.B. Hausnetz) und/oder dem öffentlichen oder örtlichen Stromnetz elektrisch gekoppelt sein. Bei der Kopplung mit dem öffentlichen oder örtlichen Stromnetz kann elektrische Energie in dieses Stromnetz eingespeist werden. In diesem Fall kann das öffentliche oder örtliche Stromnetz den oder einen der systemexternen elektrischen Verbraucher bilden. Ferner kann der oder einer der systemexternen elektrischen Verbraucher durch das Gebäudenetz mit dem Generator elektrisch gekoppelt sein. Da das Gebäudenetz für sich genommen bevorzugt keine relevanten elektrischen Verluste hervorruft, wird dieses lediglich als zwischengeschaltet betrachtet. Alternativ ist es aber möglich, z.B. bei Berücksichtigung der elektrischen Verluste des Gebäudenetzes und/oder bei einer logischen Zusammenfassung von an das Gebäudenetz angeschlossenen elektrischen Verbrauchern und dem Gebäudenetz, das elektrische Gebäudenetz selbst als den oder einen der systemexternen elektrischen Verbraucher anzusehen.

Der elektrische Generator kann lediglich zur elektrischen Versorgung eines Einfamilienhauses oder eines vergleichbaren Objekts verwendet werden. Alternativ ist es möglich, mehrere Einfamilienhäuser, ein oder mehrere Mehrfamilienhäuser oder ein vergleichbares Objekt, wie z.B. ein Hotel, mit Strom zu versorgen. Die abgebbare elektrische Leistung des Generators kann dabei bis zu 70 kW und mehr betragen.

Als Wärmeträgermedium wird bevorzugt Wasser verwendet, das insbesondere mit einem Frostschutzmittel, wie z.B. Glykol, versetzt ist. Dieses Wärmeträgermedium kann für den primären Heizkreislauf, für den sekundären Heizkreislauf, für den zusätzlichen Kreislauf und/oder für den Wärmekreislauf verwendet werden. Damit das Wärmeträgermedium in dem primären Heizkreislauf gut zirkuliert oder zirkulieren kann, ist bevorzugt eine Pumpe zum Fördern des Wärmeträgermediums in den primären Heizkreislauf geschaltet, die insbesondere in die Brennkraftmaschine integriert ist, aber auch extern von dieser vorgesehen sein kann. Ferner können der sekundäre Heizkreislauf, der zusätzliche Kreislauf und/oder der Wärmekreislauf jeweils eine Pumpe zum Fördern des jeweiligen Wärmeträgermediums aufweisen.

Als Kältemittel kann z.B. ein zeotropes Gemisch von Kohlenwasserstoffen oder eine anorganische Verbindung eingesetzt werden. Insbesondere werden R407C, R410A oder Kohlendioxid (CO₂) als Kältemittel verwendet. Bevorzugt wird dabei R407C bei einem Druck von bis zu ca. 20 bar, R410A bei einem Druck von bis zu ca. 40 bar oder Kohlendioxid bei einem Druck von bis zu ca. 160 bar bis 170 bar eingesetzt.

Die Brennkraftmaschine ist insbesondere als Gasmotor ausgebildet, dem als Kraftstoff Gas, wie z.B. Erdgas, zugeführt wird oder zuführbar ist, welches in gasförmiger oder in flüssiger Form vorliegen und z.B. in einem Tank gespeichert sein kann. Bevorzugt wird die Brennkraftmaschine aber über das öffentliche oder örtliche Gasnetz mit Gas versorgt. Alternativ ist auch eine andere Brennkraftmaschine als ein Gasmotor möglich.

Der elektrische Generator ist insbesondere ein Drehstromgenerator und liefert bevorzugt bei einer Frequenz von ca. 50 Hz Strangspannungen von ca. 230 V bzw. verkettete Spannungen von ca. 400 V. Alternativ kann der Generator auch lediglich ein Einphasengenerator sein, der z.B. bei ca. 50 Hz eine Spannung von ca. 230 V liefert. Bei Einsatz des erfindungsgemäßen Energieversorgungssystems im Ausland oder bei Spezialanwendungen können auch andere Werte für Frequenz und/oder Spannung geeignet sein.

Mit dem Generator ist bevorzugt eine Regelung gekoppelt, welche die Drehzahl des Generators oder die Frequenz der erzeugten elektrischen Spannung mittels eines geeigneten Sensors erfasst und die Drehzahl des Generators in Abhängigkeit von dem erfassten Wert variieren kann, so dass die Drehzahl des Generators und/oder die Frequenz der erzeugten elektrischen Spannung während des Betriebs des Systems auf einer vorgegebenen Drehzahl bzw. Frequenz oder innerhalb einer vorgegebenen zulässigen Abweichung davon gehalten werden kann. Diese Regelung ist z.B. mit der Brennkraftmaschine gekoppelt, um deren Drehzahl entsprechend variieren zu können, welche die Drehzahl des Generators bestimmt.

Gemäß einem Beispiel dauert das Anlaufen der Brennkraftmaschine aus dem Stand bis zum Erreichen eines stabilen Laufzustands ca. 30 bis 60 Minuten bei angekuppeltem Generator und abgekuppeltem Verdichter, wobei von der Brennkraftmaschine eine Wärmeleistung von ca. 5 kW bis 150 kW an den primären Heizkreislauf abgebbar ist oder abgegeben wird. Ist die Temperatur des primären Heizkreislaufs zu gering, so wird der Verdichter angekuppelt, wobei durch den Kältekreislauf eine Wärmeleistung von bis zu ca. 155 kW zusätzlich an den primären Heizkreislauf abgebbar ist oder abgegeben wird. Diese Zahlenangaben sind lediglich beispielhaft zu verstehen und können sich ändern.

Das erfindungsgemäße Energieversorgungssystem bildet bevorzugt eine bauliche Einheit, die als Bauelemente wenigstens die Brennkraftmaschine, den elektrischen Generator, den Verdichter, die erste schaltbare Kupplung, das Triebmittel (insbesondere Riementrieb) zum Koppeln der Brennkraftmaschine mit dem elektrischen Generator und dem Verdichter, den primären Heizkreislauf und den Kältekreislauf aufweist. Ferner kann die bauliche Einheit als Bauelemente den Abgaswärmetauscher, den Wärmetauscher zum Koppeln des primären Heizkreislaufs mit dem sekundären Heizkreislauf, den Wärmetauscher zum Koppeln des Kältekreislaufs mit dem primären Heizkreislauf, den Wärmetauscher zum Koppeln des Kältekreislaufs mit dem Wärmekreislauf und/oder die zweite schaltbare Kupplung umfassen. Die bauliche Einheit weist insbesondere ein Gestell oder Gehäuse auf, an und/oder in dem die einzelnen Bauelemente des Energieversorgungssystems befestigt sind. Der wenigstens eine systemexterne elektrische Verbraucher, der wenigstens eine systemexterne Wärmverbraucher, der Absorber und die systemexterne Wärmequelle sind dagegen bevorzugt außerhalb dieser baulichen Einheit vorgesehen und bilden systemexterne Elemente, wobei die elektrischen Leitungen, der Wärmkreislauf und der sekundäre Heizkreislauf die Verbindungen zwischen diesen systemexternen Elementen und der baulichen Einheit bzw. dem Energieversorgungssystem bilden.

Die Erfindung betrifft ferner ein Verfahren und/oder die Verwendung eines Energieversorgungssystem zur Versorgung eines elektrischen Gebäudenetzes (z.B. Hausnetz) mit elektrischer Energie und zur Erwärmung von Brauchwasser und/oder einer Heizung oder Heizungswasser in einem Gebäude (z.B. Haus). Dabei handelt es sich bei dem Energieversorgungssystem um ein erfindungsgemäßes Energieversorgungssystem, welches gemäß allen genannten Ausgestaltungen weitergebildet sein kann.

Die schaltbare Kupplung wird bevorzugt in Abhängigkeit von der Temperatur des primären und/oder sekundären Heizkreislaufs in einen gekuppelten Zustand geschaltet (falls mehr Wärme bzw. eine höhere Temperatur von dem Energieversorgungssystem geliefert soll) oder in einen entkuppelten Zustand geschaltet (falls weniger Wärme bzw. eine niedrigere Temperatur von dem Energieversorgungssystem geliefert werden soll), wofür z.B. die Temperatur des primären und/oder des sekundären Heizkreislaufs gemessen werden kann.

Die Erfindung wird nachfolgend anhand einer bevorzugten Ausführungsform der Erfindung unter Bezugname auf die Zeichnung erläutert. In der Zeichnung zeigen:
- Fig. 1: eine schematische Darstellung einer Ausführungsform des erfindungsgemäßen Energieversorgungssystems,
- Fig. 2: eine schematische Ansicht des Kältekreislaufs der Ausführungsform und
- Fig. 3: eine schematische Ansicht des Generators und des Verdichters der Ausführungsform.

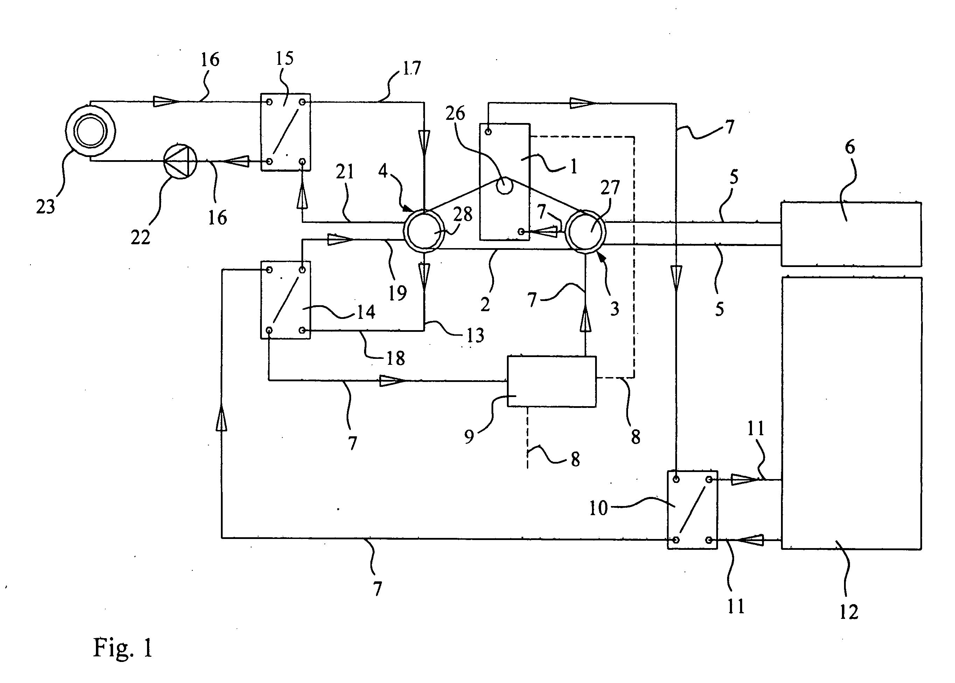

Aus Fig. 1 ist ein Energieversorgungssystems gemäß einer Ausführungsform der Erfindung ersichtlich, wobei eine Brennkraftmaschine 1 über einen Riementrieb mit einem elektrischen Generator 3 und mit einem Verdichter 4 mechanisch gekoppelt ist, so dass der Generator 3 und der Verdichter 4 von der Brennkraftmaschine 1 angetrieben werden oder antreibbar sind. Dafür weisen die Brennkraftmaschine 1, der Generator 3 und der Verdichter 4 jeweils eine Riemenscheibe 26, 27 bzw. 28 auf, an denen ein Riemen 2 des Riementriebs anliegt und insbesondere kraftschlüssig und/oder formschlüssig mit den Riemenscheiben 26, 27, 28 zusammenwirkt. Der Generator 3 kann elektrische Energie liefern, die unter Zwischenschaltung von elektrischen Leitungen 5 für einen oder mehrere elektrische Verbraucher 6 nutzbar ist.

Die von der Brennkraftmaschine 1 und von dem Generator 3 erzeugte Abwärme wird einem primären Heizkreislauf 7 zugeführt, in dem ein Wärmeträgermedium zirkuliert und der thermisch mit der Brennkraftmaschine 1 und mit dem Generator 3 gekoppelt ist. Insbesondere bildet der primäre Heizkreislauf 7 einen Kühlkreislauf für die Brennkraftmaschine 1 und für den Generator 3. Ferner ist die Abgasleitung 8 der Brennkraftmaschine 1 über einen Wärmetauscher 9 thermisch mit dem primären Heizkreislauf 7 gekoppelt, in den zum Fördern des Wärmeträgermediums eine Pumpe geschaltet ist, welche in die Brennkraftmaschine 1 integriert ist. Alternativ kann die Pumpe aber auch extern von der Brennkraftmaschine 1 in den primären Heizkreislauf 7 geschaltet sein. Der primäre Heizkreislauf 7 weist mehrere Leitungen auf, die in Fig. 1 mit Pfeilen versehen sind, welche die Strömungsrichtung des Wärmeträgermediums des primären Heizkreislaufs 7 verdeutlichen.

Über einen Wärmetauscher 10 ist der primäre Heizkreislauf 7 mit einem sekundären Heizkreislauf 11 thermisch gekoppelt, in dem ein Wärmeträgermedium zirkuliert und der mit wenigstens einem Wärmeverbraucher 12 thermisch gekoppelt ist, welcher z.B. eine Heizung oder/oder ein Wärmetauscher zum Erwärmen von Brauchwasser und/oder Heizungswasser ist. Alternaiv kann der sekundäre Heizkreis 12 selbst einen Brauchwasserkreis bilden. Der sekundäre Heizkreislauf 11 weist mehrere Leitungen auf, die in Fig. 1 mit Pfeilen versehen sind, welche die Strömungsrichtung des Wärmeträgermediums des sekundären Heizkreislaufs 11 verdeutlichen.

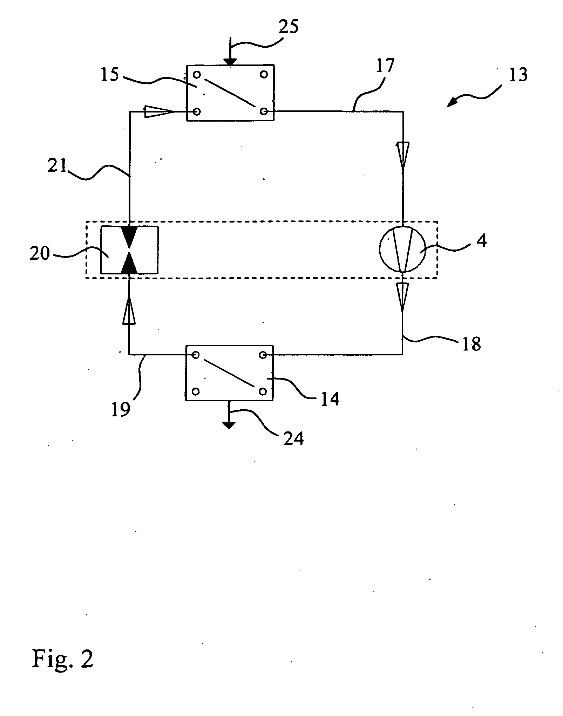

Der Verdichter 4 ist in einen Kältekreislauf 13 geschaltet, in dem ein Kältemittel zirkuliert und in den ein Verflüssiger (Kondensator) 14 geschaltet ist, der als Plattenwärmetauscher oder Rohrbündelwärmetauscher ausgebildet ist, mittels welchem der Kältekreislauf 13 mit dem primären Heizkreislauf 7 thermisch gekoppelt ist. Ferner ist in den Kältekreislauf 13 ein Verdampfer 15 geschaltet, der als Plattenwärmetauscher oder Rohrbündelwärmetauscher ausgebildet ist, mittels welchem der Kältekreislauf 13 mit einem Wärmekreislauf 16 thermisch gekoppelt ist, in dem ein Wärmeträgermedium zirkuliert. Eine Leitung 17 des Kältekreiskaufs 13 verbindet den Ausgang des Verdampfers 15 mit dem Eingang des Verdichters 4, dessen Ausgang über eine Leitung 18 des Kältekreiskaufs 13 mit dem Eingang des Verflüssigers 14 verbunden ist. Eine Leitung 19 des Kältekreiskaufs 13 verbindet den Ausgang des Verflüssigers 14 mit dem Eingang eines Expansionsventils 20 (siehe Fig. 2), dessen Ausgang über eine Leitung 21 des Kältekreiskaufs 13 mit dem Eingang des Verdampfers 15 verbunden ist. Das Expansionsventils 20 bildet dabei mit dem Verdichter 4 eine bauliche Einheit. Die Leitungen 17, 18, 19 und 21 des Kältekreislaufs 13 sind in Fig. 1 mit Pfeilen versehen, welche die Strömungsrichtung des Kältemittels des Kältekreislaufs 13 verdeutlichen.

In den Wärmekreislauf 16 sind eine Pumpe 22 und ein Absorber 23 geschaltet, der insbesondere im Erdreich in einer bestimmten Tiefe angeordnet ist, dort Erdwärme aufnehmen und an das Wärmeträgermedium des Wärmkreislaufs 16 abgeben kann. Der Wärmkreislauf 16 weist mehrere Leitungen auf, die in Fig. 1 mit Pfeilen versehen sind, welche die Strömungsrichtung des Wärmeträgermediums des Wärmkreislaufs 16 verdeutlichen.

Aus Fig. 2 ist eine schematische Ansicht des Kältekreislaufs 13 ersichtlich, wobei das gestrichelt dargestellte Rechteck die Zusammenfassung von Expansionsventil 20 und Verdichter 4 zu einer baulichen Einheit verdeutlichen soll. Anstelle des Expansionsventils 20 kann aber auch eine Drossel vorgesehen sein. Der Pfeil 24 soll symbolisieren, dass Abwärme von dem Verflüssiger 14 dem primären Heizkreislauf 7 zugeführt wird. Ferner soll der Pfeil 25 symbolisieren, dass dem Verdampfer 15 Wärme von dem Wärmekreislauf 16 zugeführt wird.

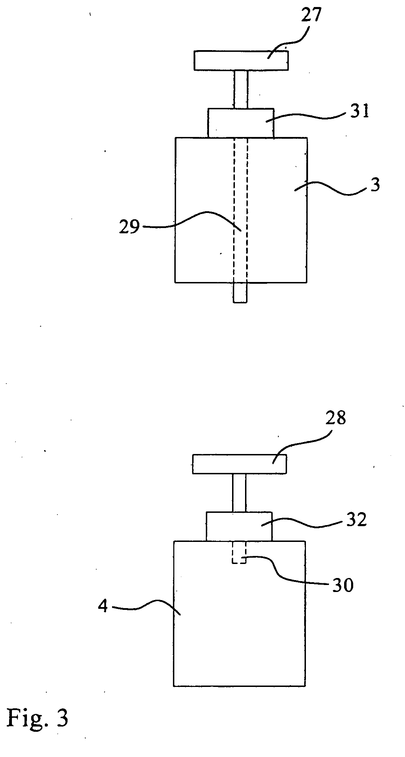

Aus Fig. 3 ist eine schematische Ansicht des Generators 3 und des Verdichters 4 ersichtlich, die jeweils eine Antriebswelle 29 bzw. 30 aufweisen, wobei die Antriebswellen 29 und 30 unter Zwischenschaltung jeweils einer schaltbaren Kupplung 31 bzw. 32 mit der jeweiligen Riemenscheibe 27, 28 verbunden sind. Die aus Fig. 1 ersichtliche Riemenscheibe 26 wird von der Brennkraftmaschine 1 gedreht, so dass mittels des Riemens 2 auch die Riemenscheiben 27 und 28 gedreht werden. Ist die Kupplung 31 in den gekuppelten Zustand geschaltet, wird der Generator 3 von der Brennkraftmaschine 1 angetrieben, ist die Kupplung 32 in den gekuppelten Zustand geschaltet, wird der Verdichter 4 von der Brennkraftmaschine 1 angetrieben.

### Bezugszeichenliste

- 1: Brennkraftmaschine
- 2: Riemen
- 3: Generator
- 4: Verdichter
- 5: elektrische Leitung
- 6: elektrischer Verbraucher
- 7: primärer Heizkreislauf
- 8: Abgasleitung
- 9: Wärmetauscher
- 10: Wärmetauscher
- 11: sekundärer Heizkreislauf
- 12: Wärmeverbraucher
- 13: Kältekreislauf
- 14: Verflüssiger
- 15: Verdampfer
- 16: Wärmekreislauf
- 17: Leitung
- 18: Leitung
- 19: Leitung
- 20: Expansionsventil
- 21: Leitung
- 22: Pumpe
- 23: Absorber
- 24: Pfeil
- 25: Pfeil
- 26: Riemenscheibe
- 27: Riemenscheibe
- 28: Riemenscheibe
- 29: Antriebswelle
- 30: Antriebswelle
- 31: schaltbare Kupplung
- 32: schaltbare Kupplung

## Patentansprüche

1. Energieversorgungssystem für Elektrizität, und Wärme, mit einer Brennkraftmaschine (1), einem von der Brennkraftmaschine (1) angetriebenen oder antreibbaren elektrischen Generator (3), der mit wenigstens einem systemexternen elektrischen Verbraucher (6) elektrisch gekoppelt oder koppelbar ist, einem mit der Brennkraftmaschine (1) thermisch gekoppelten primären Heizkreislauf (7), der ein Warmeträgermedium aufweist und mit wenigstens einem systemexternen Wärmeverbraucher (12) thermisch gekoppelt oder koppelbar ist, und einem von der Brennkraftmaschine (1) unter Zwischenschaltung einer schaltbaren Kupplung (32) angetriebenen oder antreibbaren Verdichter (4), der in einen Kältekreislauf (13) geschaltet ist, der ein Kältemittel aufweist, **dadurch gekennzeichnet, dass**
- der Kältekreislauf (13) mit dem primären Heizkreislauf (7) und unter Zwischenschaltung eines ein Wärmeträgermedium aufweisenden Wärmekreislaufs (16) mit einem mit einer systemexternen Wärmequelle thermisch gekoppelten Absorber (23) thermisch gekoppelt ist.

2. Energieversorgungssystem nach Anspruch 1, **dadurch gekennzeichnet, dass** die Brennkraftmaschine (1) dauerhaft mit dem dem elektrischen Generator (3) gekoppelt ist oder unter Zwischenschaltung einer zweiten schaltbaren Kupplung (31) mit dem elektrischen Generator (3) gekoppelt oder koppelbar ist.

3. Energieversorgungssystem nach Anspruch 1 oder 2, **dadurch gekennzeichnet, dass** die Brennkraftmaschine (1), der Generator (3) und der Verdichter (4) jeweils eine Riemenscheibe (26, 27, 28) aufweisen, und die Riemenscheiben (26, 27, 28) mittels eines Riemens (2) mechanisch miteinander gekoppelt sind, oder dass die Brennkraftmaschine (1) mit dem Generator (3) und/oder dem Verdichter (4) über ein anderes Triebmittel als ein Riementrieb gekoppelt ist.

4. Energieversorgungssystem nach einem der vorangehenden Ansprüche, **dadurch gekennzeichnet, dass** die systemexterne Wärmequelle eine natürliche Wärmequelle ist.

5. Energieversorgungssystem nach einem der vorangehenden Ansprüche, **dadurch gekennzeichnet**, das die systemexterne Wärmequelle die Erde ist und dem Kältekreislauf (13) Erdwärme zugeführt wird oder zuführbar ist.

6. Energieversorgungssystem nach einem der vorangehenden Ansprüche, **dadurch gekennzeichnet, dass** in den Kältekreislauf (13) ein Verflüssger (14) geschaltet ist, mittels welchem der Kältekreislauf (13) thermisch mit dem primären Heizkreislauf (7) gekoppelt ist, und dass in den Kältekreislauf (13) ein Verdampfer (15) geschaltet ist, mittels welchem der Kältekreislauf (13) thermisch mit dem Wärmekreislauf (16) gekoppelt ist.

7. Energieversorgungssystem nach einem der vorangehenden Ansprüche, **dadurch gekennzeichnet, dass** der primäre Heizkreislauf (7) einen Kühlkreislauf für die Brennkraftmaschine (1) bildet.

8. Energieversorgungssystem nach einem der vorangehenden Ansprüche, **dadurch gekennzeichnet dass** die Brennkraftmaschine (1) eine Abgasleitung (8) aufweist, die mittels eines Wärmetauschers (9) mit dem primären Heizkreislauf (7) thermisch gekoppelt ist.

9. Energieversorgungssystem nach einem der vorangehenden Ansprüche, **dadurch gekennzeichnet, dass** der Generator (3) mit dem primären Heizkreislauf (7) thermisch gekoppelt ist.

10. Energievcrsorgungssystem nach einem der vorangehenden Ansprüche, **dadurch gekennzeichnet, dass** der primäre Heizkreislauf (7) mit dem systemexternen Wärmeverbraucher (12) unter Zwischenschaltung eines sekundären Heizkreislaufs (11) thermisch gekoppelt ist, der ein Wärmeträgermedium aufweist und mittels eines Wärmetauschers (10) mit dem primären Heizkreislauf (7) thermisch gekoppelt ist.

11. Energieversorgungssystem nach einem der vorangehenden Ansprüche, **dadurch gekennzeichnet, dass** der wenigstens eine Wärmeverbraucher (12) eine Heizung und/oder ein Wärmetauscher zum Erwärmen von Brauchwasser ist.

12. Energieversorgungssystem nach einem der vorangehenden Ansprüche, **dadurch** gekennzeichet, dass der elektrische Generator (3) mit einem elektrischen Gebäudenetz und/oder mit dem öffentlichen Stromnetz elektrisch gekoppelt ist.

13. Verwendung eines Energieversorgungssystems zur Versorgung eines elektrischen Gebäudenetzes mit elektrischer Energie und zur Erwärmung von Bauchwasser und/oder einer Heizung in einem Gebäude, wobei das Energieversorgungssystem eine Brennkraftmaschine (1), einen von der Brennkraftmaschine (1) angetriebenen oder antreibbaren elektrischen Generator (3), der mit wenigstens einem systemexternen elektrischen Verbraucher (6) elektrisch gekoppelt oder koppelbar ist, einen mit der Brennkraftmaschine (1) thermisch gekoppelten primären Heizkreislauf (7), der ein Wärmeträgermedium umfasst und mit wenigstens einem systemexternen Wärmeverbraucher (12) thermisch gekoppelt oder koppelbar ist, und einen von der Brennkraftmaschine (1) unter Zwischenschaltung einer schaltbaren Kupplung (32) angetriebenen oder antreibbaren Verdichter (4) aufweist, der in einen Kältekreislauf (13) geschaltet ist, der ein Kältemittel aufweist und mit dem primären Heizkreislauf (7) thermisch gekoppelt ist, wobei der Kältekreislauf (13) unter Zwischenschaltung eines ein Wärmeträgermedium aufweisenden Wärmekreislaufs (16) mit einem mit einer systemexternen Wärmequelle thermisch gekoppelten Absorber (23) thermisch gekoppelt ist.

14. Verwendung nach Anspruch 13, **dadurch gekennzeichnet, dass** die Temperatur des primären Heizkreislaufs gemessen und die schaltbare Kupplung in Abhängigkeit von der gemessenen Temperatur in einen gekuppelten Zustand oder in einen entkuppelten Zustand geschaltet wird.

## Claims

1. Energy supply system for electricity and heat, with a internal combustion engine (1), an electric generator (3) which is or can be driven by the internal combustion engine (1), which is or can be electrically coupled to at least one electrical consumer (6) external to the system, a primary heating circuit (7) thermally coupled to the internal combustion engine (1), which has a heat carrier medium, and is or can be thermally coupled to at least one heat consumer (12) external to the system, and a compressor (4) which is or can be driven by the internal combustion engine (1) by the intermediate engagement of a switchable coupling (32), which compressor (4) is connected into a refrigeration circuit (13), which has a refrigerating medium, **characterised in that**
- the refrigeration circuit (13) is thermally coupled to the primary heating circuit (7) and, by the intermediate engagement of a heating circuit (16) having a heat carrier medium, to an absorber (23), which is thermally coupled to a heat source external to the system.

2. Energy supply system according to Claim 1, **characterised in that** the internal combustion engine (1) is permanently coupled to the the *[sic]* electric generator (3) or is or can be coupled to the electric generator (3) by the intermediate engagement of a second switchable coupling (31).

3. Energy supply system according to Claim 1 or 2, **characterised in that** the internal combustion engine (1), the generator (3) and the compressor (4) each have a belt pulley (26, 27, 28), and the belt pulleys (26, 27, 28) are mechanically coupled to one another by means of a belt (2), or **in that** the internal combustion engine (1) is coupled to the generator (3) and/or the compressor (4) by means of another driving means than a belt drive.

4. Energy supply system according to one of the preceding claims, **characterised in that** the heat source external to the system is a natural heat source.

5. Energy supply system according to one of the preceding claims, **characterised in that** the heat source external to the system is the earth, and geothermal heat is or can be conducted to the refrigeration circuit (13).

6. Energy supply system according to one of the preceding claims, **characterised in that** a condenser (14) is connected into the refrigeration circuit (13), by means of which the refrigeration circuit (13) is thermally coupled to the primary heating circuit (7), and **in that** a condenser (15) is connected into the refrigeration circuit (13), by means of which the refrigeration circuit (13) is thermally coupled to the heating circuit (16).

7. Energy supply system according to one of the preceding claims, **characterised in that** the primary heating circuit (7) forms a cooling circuit for the internal combustion engine (1).

8. Energy supply system according to one of the preceding claims, **characterised in that** the internal combustion engine (1) has an exhaust gas line (8), which is thermally coupled to the primary heating circuit (7) by means of a heat exchanger (9).

9. Energy supply system according to one of the preceding claims, **characterised in that** the generator (3) is thermally coupled to the primary heating circuit (7).

10. Energy supply system according to one of the preceding claims, **characterised in that** the primary heating circuit (7) is thermally coupled to the heat consumer (12) external to the system by the intermediate engagement of a secondary heating circuit (11), which has a heat carrier medium and is thermally coupled to the primary heating circuit (7) by means of a heat exchanger (10).

11. Energy supply system according to one of the preceding claims, **characterised in that** the at least one heat consumer (12) is a heating unit and/or a heat exchanger for the heating of service water.

12. Energy supply system according to one of the preceding claims, **characterised in that** the electric generator (3) is coupled to an electrical network of a building and/or to the public electricity mains supply.

13. Use of an energy supply system for supplying an electrical network of a building with electrical energy and for heating service water and/or for a heating system in a building, wherein the energy supply system has an internal combustion engine (1), an electric generator (3) which is or can be driven by the internal combustion engine (1), which is or can be electrically coupled to at least one electrical consumer (6) external to the system, a primary heating circuit (7) thermally coupled to the internal combustion engine (1), which comprises a heat carrier medium, and is or can be thermally coupled to at least one heat consumer (12) external to the system, and a compressor (4) which is or can be driven by the internal combustion engine (1) by the intermediate engagement of a switchable coupling (32), which compressor (4) is connected into a refrigeration circuit (13), which has a refrigerating medium and is thermally coupled to the primary heating circuit (7), wherein the refrigeration circuit (13) is thermally coupled, by the intermediate engagement of a heating circuit (16) having a heat carrier medium, to an absorber (23), which is thermally coupled to a heat source external to the system.

14. Use according to Claim 13, **characterised in that** the temperature of the primary heating circuit is measured and the switchable coupling is switched as a function of the temperature measured in a coupled state or in a decoupled state.

## Revendications

1. Système d'alimentation en énergie pour de l'électricité et de la chaleur, comprenant un moteur à combustion interne (1), un générateur électrique (3) qui est entraîné ou peut être entraîné par le moteur à combustion interne (1), et qui est couplé ou peut être couplé électriquement à au moins un consommateur d'électricité (6) extérieur au système, un circuit de chauffage primaire (7) couplé thermiquement au moteur à combustion interne (1) et qui présente un fluide caloporteur et est couplé ou peut être couplé thermiquement à au moins un consommateur de chaleur (12) extérieur au système, et un compresseur (4) qui est entraîné ou peut être entraîné par le moteur à combustion interne (1) en intercalant un couplage (32) commutable, qui est commuté dans un circuit frigorifique (13), présentant un fluide réfrigérant, **caractérisé en ce que** :
- le circuit frigorifique (13) est couplé thermiquement au circuit de chauffage primaire (7) et, en intercalant un circuit calorifique (16) présentant un fluide caloporteur, à un absorbeur (23) couplé thermiquement à une source de chaleur extérieure au système.

2. Système d'alimentation en énergie selon la revendication 1, **caractérisé en ce que** le moteur à combustion interne (1) est couplé de manière durable au générateur électrique (3) ou est couplé ou peut être couplé au générateur électrique (3) en intercalant un second couplage (31) commutable.

3. Système d'alimentation en énergie selon la revendication 1 ou 2, **caractérisé en ce que** le moteur à combustion interne (1), le générateur (3) et le compresseur (4) présentent respectivement une poulie de courroie (26, 27, 28) et **en ce que** les poulies de courroie (26, 27, 28) sont couplées mécaniquement l'une à l'autre au moyen d'une courroie (2) ou **en ce que** le moteur à combustion interne (1) est couplé au générateur (3) et/ou au compresseur (4) par le biais d'un autre moyen de commande, tel qu'une commande à courroie.

4. Système d'alimentation en énergie selon l'une quelconque des revendications précédentes, **caractérisé en ce que** la source de chaleur extérieure au système est une source de chaleur naturelle.

5. Système d'alimentation en énergie selon l'une quelconque des revendications précédentes, **caractérisé en ce que** la source de chaleur extérieure au système est la terre et **en ce que** de la chaleur terrestre est acheminée ou acheminable au circuit frigorifique (13).

6. Système d'alimentation en énergie selon l'une quelconque des revendications précédentes, **caractérisé en ce que** dans le circuit frigorifique (13) est monté un condenseur (14) au moyen duquel le circuit frigorifique (13) est couplé thermiquement au circuit de chauffage primaire (7) et **en ce que** dans le circuit frigorifique (13) est monté un évaporateur (15) au moyen duquel le circuit frigorifique (13) est couplé thermiquement au circuit calorifique (16).

7. Système d'alimentation en énergie selon l'une quelconque des revendications précédentes, **caractérisé en ce que** le circuit de chauffage primaire (7) forme un circuit de refroidissement pour le moteur à combustion interne (1).

8. Système d'alimentation en énergie selon l'une quelconque des revendications précédentes, **caractérisé en ce que** le moteur à combustion interne (1) présente une conduite d'évacuation (8) qui est couplée thermiquement au circuit de chauffage primaire (7) au moyen d'un échangeur de chaleur (9).

9. Système d'alimentation en énergie selon l'une quelconque des revendications précédentes, **caractérisé en ce que** le générateur (3) est couplé thermiquement au circuit de chauffage primaire (7).

10. Système d'alimentation en énergie selon l'une quelconque des revendications précédentes, **caractérisé en ce que** le circuit de chauffage primaire (7) est couplé thermiquement au consommateur de chaleur (12) extérieur au système en intercalant un circuit de chauffage secondaire (11), qui présente un fluide caloporteur et qui est couplé thermiquement au circuit de chauffage primaire (7) au moyen d'un échangeur de chaleur (10).

11. Système d'alimentation en énergie selon l'une quelconque des revendications précédentes, **caractérisé en ce que** le au moins un consommateur de chaleur (12) est un chauffage et/ou un échangeur de chaleur destiné à chauffer de l'eau non potable.

12. Système d'alimentation en énergie selon l'une quelconque des revendications précédentes, **caractérisé en ce que** le générateur électrique (3) est couplé électriquement au réseau électrique d'un bâtiment et/ou au réseau d'alimentation public.

13. Utilisation d'un système d'alimentation en énergie pour alimenter le réseau électrique d'un bâtiment en énergie électrique et pour chauffer de l'eau non potable et/ou un système de chauffage dans un bâtiment, dans laquelle le système d'alimentation en énergie comprend un moteur à combustion interne (1), un générateur électrique (3) qui est entraîné ou peut être entraîné par le moteur à combustion interne (1), qui est couplé ou peut être couplé électriquement à au moins un consommateur d'électricité (6) extérieur au système, un circuit de chauffage primaire (7) couplé thermiquement au moteur à combustion interne (1), et qui comprend un fluide caloporteur et est couplé ou peut être couplé thermiquement à au moins un consommateur de chaleur (12) extérieur au système, et un compresseur (4) qui est entraîné ou peut être entraîné par le moteur à combustion interne (1) en intercalant un couplage (32) commutable, qui est monté dans un circuit frigorifique (13), qui présente un fluide réfrigérant et qui est couplé thermiquement au circuit de chauffage primaire (7), dans laquelle le circuit frigorifique (13) est couplé thermiquement, en intercalant un circuit calorifique (16) présentant un fluide caloporteur, à un absorbeur (23) couplé thermiquement à une source de chaleur extérieure au système.

14. Utilisation selon la revendication 13, **caractérisé en ce que** la température du circuit de chauffage primaire est mesurée et **en ce que** le couplage commutable est commuté en fonction de la température mesurée dans un état couplé ou dans un état découplé.
